(19) Europäisches Patentamt
European Patent Office
Office européen des brevets

(11) **EP 4 297 120 A1**

(12) **EUROPEAN PATENT APPLICATION**
published in accordance with Art. 153(4) EPC

(43) Date of publication:
**27.12.2023 Bulletin 2023/52**

(21) Application number: **22755971.3**

(22) Date of filing: **04.02.2022**

(51) International Patent Classification (IPC):
*H01M 4/13* (2010.01)   *H01M 4/133* (2010.01)
*H01M 4/134* (2010.01)   *H01M 4/36* (2006.01)
*H01M 4/38* (2006.01)   *H01M 4/48* (2010.01)
*H01M 4/587* (2010.01)

(52) Cooperative Patent Classification (CPC):
**H01M 4/13; H01M 4/133; H01M 4/134; H01M 4/36;**
**H01M 4/38; H01M 4/48; H01M 4/587;** Y02E 60/10

(86) International application number:
**PCT/JP2022/004496**

(87) International publication number:
**WO 2022/176650 (25.08.2022 Gazette 2022/34)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **18.02.2021 JP 2021023988**

(71) Applicant: **Panasonic Energy Co., Ltd.**
**Moriguchi-shi, Osaka, 570-8511 (JP)**

(72) Inventors:
• **TASHITA, Takamitsu**
  **Kadoma-shi, Osaka 571-0057 (JP)**
• **KATOGI, Akihiro**
  **Kadoma-shi, Osaka 571-0057 (JP)**
• **MIZUKOSHI, Fumikazu**
  **Kadoma-shi, Osaka 571-0057 (JP)**
• **NAKAMORI, Toshiyuki**
  **Kadoma-shi, Osaka 571-0057 (JP)**

(74) Representative: **Novagraaf International SA**
**Chemin de l'Echo 3**
**1213 Onex, Geneva (CH)**

(54) **NEGATIVE ELECTRODE FOR NONAQUEOUS ELECTROLYTE SECONDARY BATTERIES, AND NONAQUEOUS ELECTROLYTE SECONDARY BATTERY**

(57)    With respect to a negative electrode for nonaqueous electrolyte secondary batteries according to the present invention, a negative electrode mixture layer comprises a lower layer that is formed on the negative electrode core body side and an upper layer that is formed on the front surface side of the negative electrode mixture layer. According to the present invention, graphite particles contain: first graphite particles which have a circularity of less than 0.92; and second graphite particles which have a higher circularity than the first graphite particles. The ratio of the breaking strength of the first graphite particles to the breaking strength of the second graphite particles is 2 to 5. The content ratio of the first graphite particles relative to the graphite particles in the upper layer is 30% by mass or more, and is higher than the content ratio of the first graphite particles relative to the graphite particles in the lower layer.

Figure 2

**Description**

TECHNICAL FIELD

The present disclosure generally relates to a negative electrode for a non-aqueous electrolyte secondary battery, and a non-aqueous electrolyte secondary battery using the negative electrode.

BACKGROUND ART

Non-aqueous electrolyte secondary batteries such as lithium-ion batteries are applied for on-board use, power storage use, and the like. Performance required for the non-aqueous electrolyte secondary battery for on-board or power storage use includes a high energy density, good charge-discharge cycle characteristics, and quick-charging ability. Since a negative electrode, which is a main constituent of the battery, significantly affects the performance, many investigations have been made on the negative electrode. For example, Patent Literature 1 discloses a lithium-ion battery using a negative electrode active material composed of a mixture of at least two types of carbon particles having different particle fracture strength. Patent Literature 2 discloses a lithium-ion battery using a negative electrode active material having a circularity of greater than or equal to 0.85 and less than or equal to 0.90.

CITATION LIST

PATENT LITERATURE

PATENT LITERATURE 1: Japanese Unexamined Patent Application Publication No. 2012-151087
PATENT LITERATURE 2: Japanese Unexamined Patent Application Publication No. 2011-175842

SUMMARY

TECHNICAL PROBLEM

Adhesiveness of a negative electrode mixture layer to a negative electrode core and permeability of an electrolyte liquid into the negative electrode mixture layer are important factors for improving the battery performance such as the energy density, cycle characteristics, and quick-charging ability of the battery. However, it is not easy to achieve both of the adhesiveness and permeability, and the conventional art including Patent Literatures 1 and 2 still has a room for improvement.

It is an advantage of the present disclosure to provide a negative electrode for a non-aqueous electrolyte secondary battery that has good adhesiveness of the negative electrode mixture layer to the negative electrode core and excellent permeability of the electrolyte liquid.

SOLUTION TO PROBLEM

A negative electrode for a non-aqueous electrolyte secondary battery according to the present disclosure is a negative electrode for a non-aqueous electrolyte secondary battery comprising: a negative electrode core; and a negative electrode mixture layer formed on the negative electrode core, wherein the negative electrode mixture layer includes graphite particles as a negative electrode active material, and has a lower layer formed on a side of the negative electrode core and an upper layer formed on a surface side of the negative electrode mixture layer, the graphite particles include first graphite particles having a circularity of less than 0.92 and second graphite particles having a circularity higher than that of the first graphite particles, a ratio of a fracture strength of the first graphite particles to a fracture strength of the second graphite particles is greater than or equal to 2 and less than or equal to 5, and a content rate of the first graphite particles to the graphite particles in the upper layer is greater than or equal to 30 mass%, and is higher than a content rate of the first graphite particles to the graphite particles in the lower layer.

A non-aqueous electrolyte secondary battery according to the present disclosure comprises: the above negative electrode; a positive electrode; and a non-aqueous electrolyte.

ADVANTAGEOUS EFFECT OF INVENTION

The negative electrode for a non-aqueous electrolyte secondary battery according to the present disclosure has good adhesiveness of the negative electrode mixture layer to the negative electrode core and excellent permeability of the electrolyte liquid. The non-aqueous electrolyte secondary battery using the negative electrode according to the present disclosure has, for example, a high energy density, good cycle characteristics, and excellent quick-charging ability.

BRIEF DESCRIPTION OF DRAWINGS

FIG. 1 is a sectional view of a non-aqueous electrolyte secondary battery of an example of an embodiment.
FIG. 2 is a sectional view of a negative electrode of an example of an embodiment.

DESCRIPTION OF EMBODIMENTS

As noted above, improvements of the adhesiveness of the negative electrode mixture layer to the negative electrode core and the permeability of the electrolyte liquid into the negative electrode mixture layer are an important challenge in improving the battery performance such as the energy density, cycle characteristics, and quick-charging ability of the battery. The present inventors have made intensive investigation to solve the above problem, and consequently have found that forming the negative electrode mixture layer as a layered structure including a lower layer on a side of the negative electrode core and an upper layer on a surface side, and disposing first graphite particles having a circularity of less than 0.92 at a larger amount in the upper layer remarkably improve the permeability of the electrolyte liquid. This is presumably because the non-spherical first graphite particles appropriately roughen the surface of the negative electrode mixture layer to reduce a contact angle to the electrolyte liquid, which facilitates permeation of the electrolyte liquid into the negative electrode mixture layer.

In the lower layer of the negative electrode mixture layer, disposing the first graphite particles at a smaller amount than that in the upper layer and disposing the softer second graphite particles having a higher circularity than the first graphite particles at a large amount may increase a contact area between the negative electrode mixture layer and the negative electrode core, and the adhesiveness of the negative electrode mixture layer to the negative electrode core is improved. That is, for the adhesiveness of the negative electrode mixture layer and the permeability of the electrolyte liquid, there is an optimal balance between the circularity and hardness (fracture strength) of the graphite particles constituting the negative electrode mixture layer. The constitution of the negative electrode mixture layer according to the present disclosure may attempt to achieve both of the adhesiveness and the permeability.

Hereinafter, an example of an embodiment of the non-aqueous electrolyte secondary battery according to the present disclosure will be described in detail with reference to Drawings. Note that, the present disclosure includes selectively combining a plurality of embodiments and modified examples described below.

Hereinafter, a cylindrical battery in which a wound electrode assembly 14 is housed in a bottomed cylindrical exterior housing can 16 will be exemplified, but the exterior of the battery is not limited to a cylindrical exterior housing can, and may be, for example, a rectangular exterior housing can (rectangular battery), a coin-shaped exterior housing can (coin-shaped battery), or an exterior composed of laminated sheets including a metal layer and a resin layer (laminated battery). The electrode assembly may be a stacked electrode assembly in which a plurality of positive electrodes and a plurality of negative electrodes are alternately stacked with a separator interposed therebetween.

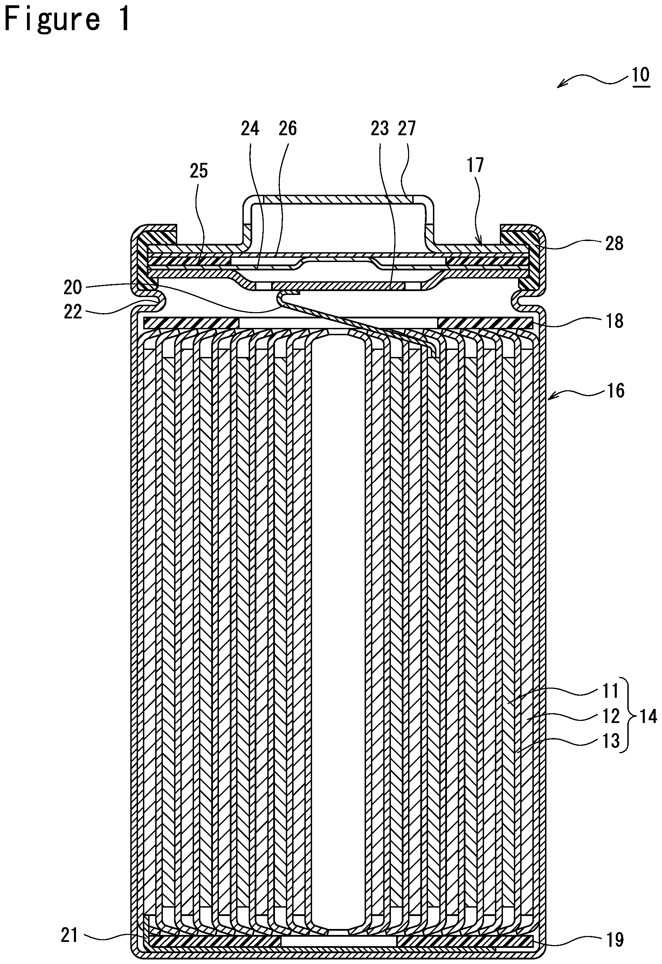

FIG. 1 is a view schematically illustrating a cross section of a non-aqueous electrolyte secondary battery 10 of an example of an embodiment. As illustrated in FIG. 1, the non-aqueous electrolyte secondary battery 10 comprises the wound electrode assembly 14, a non-aqueous electrolyte, and the exterior housing can 16 housing the electrode assembly 14 and the non-aqueous electrolyte. The electrode assembly 14 has a positive electrode 11, a negative electrode 12, and a separator 13, and has a wound structure in which the positive electrode 11 and the negative electrode 12 are spirally wound with the separator 13 interposed therebetween. The exterior housing can 16 is a bottomed cylindrical metallic container having an opening on one side in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

The non-aqueous electrolyte includes a non-aqueous solvent and an electrolyte salt dissolved in the non-aqueous solvent. For the non-aqueous solvent, esters, ethers, nitriles, amides, a mixed solvent of two or more thereof, and the like are used, for example. The non-aqueous solvent may contain a halogen-substituted derivative in which hydrogen of these solvents is at least partially replaced with a halogen element such as fluorine. An example of the non-aqueous solvent is ethylene carbonate (EC), ethyl methyl carbonate (EMC), dimethyl carbonate (DMC), a mixed solvent thereof, or the like. For the electrolyte salt, a lithium salt such as $LiPF_6$ is used, for example. The non-aqueous electrolyte is not limited to a liquid electrolyte but may be a solid electrolyte.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction (short direction). Two separators 13 are formed to be one size larger than at least the positive electrode 11, and disposed to sandwich the positive electrode 11. The electrode assembly 14 has a positive electrode lead 20 connected to the positive electrode 11 by welding or the like and a negative electrode lead 21 connected to the negative electrode 12 by welding or the like.

Insulating plates 18 and 19 are disposed on the upper and lower sides of the electrode assembly 14, respectively. In the example illustrated in FIG. 1, the positive electrode lead 20 extends through a through hole of the insulating plate 18 toward the sealing assembly 17 side, and the negative electrode lead 21 extends through an outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

The exterior housing can 16 is a bottomed cylindrical metallic container having an opening on one side in an axial direction, as noted above. A gasket 28 is provided between the exterior housing can 16 and the sealing assembly 17, thereby sealability inside the battery and insulation between the exterior housing can 16 and the sealing assembly 17 are ensured. On the exterior housing can 16, a grooved portion 22 in which a part of a side wall thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end part of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between each of the circumferential parts. If the internal pressure increases due to battery abnormality, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening of the cap 27.

Hereinafter, the positive electrode 11, the negative electrode 12, and the separator 13, which constitute the non-aqueous electrolyte secondary battery 10, specifically the negative electrode 12, will be described in detail.

[Positive Electrode]

The positive electrode 11 has a positive electrode core and a positive electrode mixture layer formed on the positive electrode core. For the positive electrode core, a foil of a metal stable within a potential range of the positive electrode 11, such as aluminum and an aluminum alloy, a film in which such a metal is disposed on a surface layer thereof, and the like may be used. The positive electrode mixture layer includes a positive electrode active material, a conductive agent, and a binder, and is preferably provided on both surfaces of the positive electrode core except for a core exposed portion to which a positive electrode lead is to be connected. A thickness of the positive electrode mixture layer is, for example, greater than or equal to 50 $\mu$m and less than or equal to 150 $\mu$m on one side of the positive electrode core. The positive electrode 11 may be produced by applying a positive electrode mixture slurry including the positive electrode active material, the conductive agent, the binder, and the like on the surface of the positive electrode core, and drying and subsequently compressing the coating to form the positive electrode mixture layers on both the surfaces of the positive electrode core.

The positive electrode active material is constituted with a lithium-transition metal composite oxide as a main component. Examples of an element contained in the lithium-transition metal composite oxide and excluding Li include Ni, Co, Mn, Al, B, Mg, Ti, V, Cr, Fe, Cu, Zn, Ga, Sr, Zr, Nb, In, Sn, Ta, W, Si, and P. An example of the preferable lithium-transition metal composite oxide is a composite oxide containing at least one of Ni, Co, and Mn. Specific examples thereof include a lithium-transition metal composite oxide containing Ni, Co, and Mn, and a lithium-transition metal composite oxide containing Ni, Co, and Al.

Examples of the conductive agent included in the positive electrode mixture layer include a carbon material such as carbon black, acetylene black, Ketjenblack, and graphite. Examples of the binder included in the positive electrode mixture layer include a fluororesin such as polytetrafluoroethylene (PTFE) and polyvinylidene fluoride (PVDF), polyacrylonitrile (PAN), a polyimide, an acrylic resin, and a polyolefin. With these resins, a cellulose derivative such as carboxymethylcellulose (CMC) or a salt thereof, polyethylene oxide (PEO), and the like may be used in combination.

[Negative Electrode]

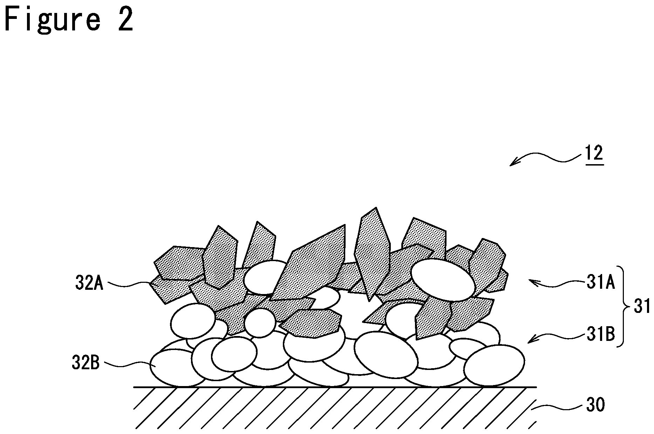

FIG. 2 is a view illustrating a part of a cross section of the negative electrode 12. The negative electrode 12 has a negative electrode core 30 and a negative electrode mixture layer 31 formed on the negative electrode core 30. For the negative electrode core 30, a foil of a metal stable within a potential range of the negative electrode 12, such as copper and a copper alloy, a film in which such a metal is disposed on a surface layer thereof, and the like may be used. The negative electrode mixture layer 31 is preferably provided on both surfaces of the negative electrode core 30 except for a core exposed portion, a portion to which a negative electrode lead is to be connected. A thickness of the negative electrode mixture layer 31 is, for example, greater than or equal to 50 $\mu$m and less than or equal to 150 $\mu$m on one side of the negative electrode core 30.

The negative electrode mixture layer 31 includes graphite particles as a negative electrode active material. The graphite particles include first graphite particles 32A having a circularity of less than 0.92 and second graphite particles 32B having a circularity higher than that of the first graphite particles 32A. Although a detail will be described later, a ratio of a fracture strength of the first graphite particles 32A to a fracture strength of the second graphite particles 32B is greater than or equal to 2 and less than or equal to 5. The circularity of the second graphite particles 32B is greater than or equal to 0.94. The negative electrode mixture layer 31 has a lower layer 31B formed on a side of the negative electrode core 30 and an upper layer 31A formed on the lower layer 31B. A content rate of the first graphite particles 32A to the graphite particles in the upper layer 31A is greater than or equal to 30 mass%. The content rate of the first graphite particles 32A to the graphite particles in the upper layer 31A is higher than a content rate of the second graphite particles 32B to the graphite particles in the lower layer 31B. The negative electrode mixture layer 31 may include graphite particles other than the first graphite particles 32A and the second graphite particles 32B, or a carbon material other than graphite within a range not impairing the object of the present disclosure. In this case, the content rate of the first graphite particles 32A is expressed as a percentage of a mass of the first graphite particles 32A relative to a total mass of the first graphite particles 32A and the second graphite particles 32B. The same applies to the second graphite particles 32B.

The negative electrode mixture layer 31 has a bilayer structure including: the lower layer 31B adhering to the negative electrode core 30; and the upper layer 31A formed directly on the lower layer 31B and forming a surface of the negative electrode mixture layer 31. As noted above, the upper layer 31A and the lower layer 31B have different existence rates of the first graphite particles 32A and the second graphite particles 32B, which constitute the layers. The first graphite particles 32A and the second graphite particles 32B are, for example, an artificial graphite, but a natural graphite may also be used. The negative electrode mixture layer 31 having such a bilayer structure may achieve good adhesiveness of the negative electrode mixture layer 31 to the negative electrode core 30, and may improve the permeability of the electrolyte liquid into the negative electrode mixture layer 31. Note that, a third layer may be formed between the upper layer 31A and the lower layer 31B, for example, within a range not impairing the object of the present disclosure.

The negative electrode mixture layer 31 includes the negative electrode active material and a binder. For example, the upper layer 31A and the lower layer 31B may include a same type of the binder at a substantially same amount. A content of the negative electrode active material is preferably greater than or equal to 85 mass% and less than or equal to 99.5 mass%, and more preferably greater than or equal to 90 mass% and less than or equal to 99 mass%, relative to the mass of the negative electrode mixture layer 31. A content of the binder is preferably greater than or equal to 0.5 mass% and less than or equal to 15 mass%, and more preferably greater than or equal to 1 mass% and less than or equal to 10 mass%, relative to the mass of the negative electrode mixture layer 31. The negative electrode mixture layer 31 may include materials other than the negative electrode active material and the binder, such as a conductive agent and a thickener.

The negative electrode mixture layer 31 may include an active material including at least one of an element that forms an alloy with Li, such as Si and Sn, and a compound containing such an element as the negative electrode active material. A preferable example of the active material is a silicon material. For the negative electrode active material, the carbon material such as graphite and the silicon material are used in combination, for example. An example of the preferable silicon material includes a silicon material in which Si fine particles are dispersed in a silicon oxide phase or a silicate phase such as lithium silicate. When the carbon material and the silicon material are used in combination as the negative electrode active material, the mixing ratio between the carbon material and the silicon material is preferably greater than or equal to 80:20 and less than or equal to 98:2.

For the binder included in the negative electrode mixture layer 31, a fluororesin, PAN, a polyimide, an acrylic resin, a polyolefin, and the like may be used as in the case of the positive electrode 11, but styrene-butadiene rubber (SBR) is preferably used. The negative electrode mixture layer 31 may further include CMC or a salt thereof, polyacrylic acid (PAA) or a salt thereof, polyvinyl alcohol (PVA), and the like. For the binder in the negative electrode mixture layer 31, SBR; and CMC or a salt thereof are preferably used in combination.

As noted above, the upper layer 31A includes greater than or equal to 30 mass% of the first graphite particles 32A. In the present embodiment, the upper layer 31A includes substantially only the first graphite particles 32A and the second graphite particles 32B as the graphite particles. In the upper layer 31A, the content rate of the first graphite particles 32A to the graphite particles is preferably greater than or equal to 50 mass%, and for example, greater than or equal to 50 mass% and less than or equal to 100 mass%. In this case, the permeability of the electrolyte liquid is more effectively improved. In the upper layer 31A, the content of the second graphite particles 32B to the graphite particles is less than or equal to 70 mass%, and preferably less than or equal to the content of the first graphite particles 32A.

The lower layer 31B preferably includes the second graphite particles 32B as a main component. Here, the main component means a component with the highest mass proportion in the materials constituting the lower layer 31B. In the lower layer 31B, the content rate of the second graphite particles 32B to the graphite particles may be 100 mass%. Although the lower layer 31B may include the first graphite particles 32A, the content of the first graphite particles 32A is preferably less than or equal to 30 mass%, and more preferably less than or equal to 20 mass%. Disposing the second graphite particles 32B at a larger amount in the lower layer 31B, which is contacted with the negative electrode core 30, improves the adhesiveness of the negative electrode mixture layer 31 to the negative electrode core 30.

A ratio of thicknesses of the upper layer 31A and the lower layer 31B is not particularly limited, and an example of the thickness of the upper layer 31A is greater than or equal to 10% and less than or equal to 60%, preferably greater than or equal to 30% and less than or equal to 55%, of a thickness of the negative electrode mixture layer 31. In other words, an example of the thickness of the lower layer 31B is preferably greater than or equal to 45% and less than or equal to 70% of the thickness of the negative electrode mixture layer 31. The thicknesses of the upper layer 31A and the lower layer 31B may be substantially same (50:50). The thickness of the upper layer 31A within the above range yields the negative electrode mixture layer 31 that achieves good adhesiveness of the negative electrode mixture layer 31 to the negative electrode core 30 and the like and that has excellent permeability of the electrolyte liquid, which more effectively improves the quick-charging ability of the battery.

As noted above, the first graphite particles 32A are graphite particles having a circularity of less than 0.92. The circularity of the graphite particle is determined as a ratio of a circumference length of a circle having a same area as the particle area to a circumference length of the particle (a circumference length of a circle having a same area as the particle area / a circumference length of the particle) in image analysis of the particle. When a shape of the particle image is a true circle, that is, when the particle has a true spherical shape, the circularity is 1.0. When the particle shape departs from the sphere, such as angular, flat, or needle shape, the circularity becomes low. The circularity of the graphite particle is measured by using an image-type particle size distribution apparatus (FPIA-3000, manufactured by SYSMEX CORPORATION).

The circularity of the first graphite particles 32A is preferably greater than or equal to 0.87, and more preferably greater than or equal to 0.88. The circularity of the first graphite particles 32A of greater than or equal to 0.87 and less than 0.92 may inhibit a decrease in a filling density of the upper layer 31A and sufficiently reduce a contact angle of the electrolyte liquid on the surface of the negative electrode mixture layer 31. The circularity of the second graphite particles 32B is preferably greater than or equal to 0.94, and for example, greater than or equal to 0.94 and less than or equal to 0.98. As illustrated in FIG. 2, the first graphite particles 32A are angular particles with sharp edges compared with the second graphite particles 32B. The second graphite particles 32B are round, and sphere-like particles compared with the first graphite particles 32A.

The first graphite particles 32A has a hardness of greater than or equal to two times and less than or equal to five times larger than the second graphite particles 32B. The hardness of the particle is evaluated as a particle fracture strength. In typical, a higher particle fracture strength means a harder particle. A fracture strength of the first graphite particles 32A (StA) is, for example, greater than or equal to 12 MPa and less than or equal to 100 MPa, and more preferably greater than or equal to 15 MPa and less than or equal to 40 MPa. A fracture strength of the second graphite particles 32B (StB) is, for example, greater than or equal to 2 MPa and less than or equal to 20 MPa, and more preferably greater than or equal to 5 MPa and less than or equal to 12 MPa. A ratio of the fracture strength (StA/StB) of greater than or equal to 2 and less than or equal to 5 easily achieves good adhesiveness of the lower layer 31B to the negative electrode core 30 and keeps the appropriately roughened surface shape of the upper layer 31A. Since the second graphite particles 32B in the lower layer 31B are appropriately crushed and filled at a high density during manufacture of the negative electrode 12, the above ratio also contributes to improvement of the energy density.

The fracture strength of the graphite particle is measured by using a micro compression tester (MCT-W201, manufactured by SHIMADZU CORPORATION) with the following method.

(1) In the micro compression tester, a sample is sprayed on a lower pressuring plate (SKS plane plate).
(2) By using an optical microscope, one particle having a particle diameter close to an average particle diameter is selected.

(The particle is selected so that the one particle is present between an upper pressuring indenter (a flat indenter made of diamond with 50 $\mu$m in diameter) and the lower pressuring plate.)

(3) The upper pressing indenter is slowly lowered, and from a time at which the indenter is contacted with the particle (a time at which the lowering speed changes), a load is started to be applied at a constant acceleration (a deformation amount of the particle is automatically measured).

(4) A point at which the deformation amount of the particle sharply changes (an inflection point in the load-deformation amount profile) is specified as a fracture point, and the fracture strength is calculated from the load and particle diameter at that time based on the following formula. The fracture strength is an average value of five measurement values.

$$St = 2.8 \, P/\pi d^2$$

St: Fracture strength [N/mm$^2$ or MPa]
P: Load [N]
d: Particle diameter [mm]

The particle diameters of the first graphite particles 32A and the second graphite particles 32B are not particularly limited, and an example of a median diameter (D50) on a volumetric basis is greater than or equal to 1 $\mu$m and less than or equal to 30 $\mu$m, and preferably greater than or equal to 5 $\mu$m and less than or equal to 20 $\mu$m. The D50 means a particle diameter at which a cumulative frequency is 50% from a smaller particle diameter side in a particle size distribution on a volumetric basis. The particle size distribution may be measured by using a laser diffraction-type particle size distribution measuring device (for example, MT3000II, manufactured by MicrotracBEL Corp.) with water as a dispersion medium. BET specific surface areas of the first graphite particles 32A and the second graphite particles 32B are not particularly limited, and an example thereof is greater than or equal to 0.5 m$^2$/g and less than or equal to 8.0 m$^2$/g. The BET specific surface area of the graphite particle is measured in accordance with a BET method (nitrogen adsorption method) described in JIS R1626.

The first graphite particles 32A and the second graphite particles 32B are manufactured by using, for example, a petroleum-based or coal-type coke material as a starting material. The circularity of the graphite particle may be regulated by a number of rotation with classification of a crushing machine (for example, a jet mill) crushing the coke. For example, increasing the number of rotation with classification is likely to decrease the circularity of the particle. The crushed coke is filled into a sheath made of graphite, and heat-treated at high temperature by using an Acheson furnace to obtain the graphite particles. In the step of manufacturing the first graphite particles 32A, a temperature of the heating treatment is set to be lower than a temperature thereof in the step of manufacturing the second graphite particles 32B, for example. An artificial graphite may be used for the first graphite particles 32A, and a natural graphite may be used for the second graphite particles 32B.

The negative electrode mixture layer 31 may be formed by using, for example, a first negative electrode mixture slurry including the first graphite particles 32A and the binder and a second negative electrode mixture slurry including the second graphite particles 32B and the binder. For example, the second negative electrode mixture slurry is applied on a surface of the negative electrode core 30, the first layer of coating is dried, then the first negative electrode mixture slurry is applied on this coating, the second layer of coating is dried, and the two layers are collectively compressed with a roller to manufacture the negative electrode 12 comprising the negative electrode mixture layer 31 having the bilayer structure. It is also possible that only the first layer of coating to be the lower layer 31B is compressed, and then the second layer of coating to be the upper layer 31A is formed.

[Separator]

For the separator 13, a porous sheet having an ion permeation property and an insulation property is used. Specific examples of the porous sheet include a fine porous thin film, a woven fabric, and a nonwoven fabric. As a material of the separator 13, a polyolefin such as polyethylene, polypropylene, and a copolymer of ethylene and an $\alpha$-olefin, cellulose, polystyrene, a polyester, polyphenylene sulfide, polyether ether ketone, a fluororesin, and the like are preferable. The separator 13 may have any of a single layer structure and a stacked structure. On a surface of the separator 13, a heat-resistant layer including inorganic particles, a heat-resistant layer constituted with a highly heat-resistant resin such as an aramid resin, a polyimide, and a polyamide imide, and the like may be formed.

EXAMPLES

Hereinafter, the present disclosure will be further described with Examples, but the present disclosure is not limited to these Examples.

<Example 1>

[Preparation of First Negative Electrode Mixture Slurry]

As a negative electrode active material, a mixture in which a graphite A1 having a particle fracture strength of 20 MPa, a circularity of 0.90, and D50 of 18 $\mu$m, a graphite B1 having a particle fracture strength of 7 MPa, a circularity of 0.95, and D50 of 18 $\mu$m, and a silicon material represented by $SiO_x$ were mixed at a mass ratio of 47:47:6 (mass ratio between the graphite A and the graphite B was 50:50) was used. The negative electrode active material, a dispersion of styrene-butadiene rubber (SBR), and sodium carboxymethylcellulose (CMC-Na) were mixed at a solid content mass ratio of 100:1:1, and an appropriate amount of water was added to prepare a first negative electrode mixture slurry. The particle fracture strength of the graphite particle was a value measured by using a micro compression tester (MCT-W201, manufactured by SHIMADZU CORPORATION). The circularity was a value measured by using an image-type particle size distribution apparatus (FPIA-3000, manufactured by SYSMEX CORPORATION). The D50 was a value measured by using a laser diffraction-type particle size distribution measuring device (MT3000II, manufactured by MicrotracBEL Corp.).

[Preparation of Second Negative Electrode Mixture Slurry]

As a negative electrode active material, a mixture in which the graphite B1 and the above silicon material were mixed at a mass ratio of 94:6 was used. The negative electrode active material, a dispersion of SBR, and CMC-Na were mixed at a solid content mass ratio of 100:1:1, and an appropriate amount of water was added to prepare a second negative electrode mixture slurry.

[Production of Negative Electrode]

By a doctor blade method, the second negative electrode mixture slurry was applied on one surface of a negative electrode core made of copper foil with 8 $\mu$m in thickness, the coating was dried, then the first negative electrode mixture slurry was applied on this coating, and the coating was dried to form a coating having a bilayer structure of the upper layer / the lower layer. In this time, amounts of each mixture slurry applied were regulated so that thicknesses of the upper layer and lower layer were approximately same. On the other surface of the negative electrode core, a coating having the bilayer structure was formed in the same manner. The coatings having the bilayer structure were compressed by using a roller, and the negative electrode core was cut to a predetermined size to produce a negative electrode in which the negative electrode mixture layers were formed on both the surfaces of the negative electrode core.
On the produced negative electrode, a permeability test of an electrolyte liquid and a peeling test were performed by the following methods. Table 1 shows the evaluation results together with the constitution of the negative electrode mixture layer (the same applies to Examples and Comparative Examples, described later).

[Evaluation of Permeability of Electrolyte Liquid]

On the surface of the negative electrode mixture layer, polyethylene carbonate (PC) was titrated with 3 $\mu$m, and a time until PC permeated from the mixture layer surface into the inside to disappear (permeation time) was measured. A shorter permeation time means more excellent permeability of the electrolyte liquid into the negative electrode mixture layer, which typically increases the quick-charging ability of the battery.

[Evaluation of Peeling Strength]

The negative electrode mixture layer was attached onto a double-sided tape adhering to a resin plate, then the negative electrode was lifted at a constant velocity, and a load with which the negative electrode mixture layer was peeled from the core was measured with a load cell to be specified as the peeling strength. A larger peeling strength indicates better adhesiveness of the negative electrode mixture layer to the negative electrode core.

<Examples 2 to 4>

Negative electrodes were produced to evaluate the above performance in the same manner as in Example 1 except that, in the preparation of the first negative electrode mixture slurry to form the upper layer of the negative electrode mixture layer, the graphite A1 and the graphite B 1 were mixed at a mass ratio shown in Table 1.

<Example 5>

A negative electrode was produced to evaluate the above performance in the same manner as in Example 1 except that, in the preparation of the first negative electrode mixture slurry to form the upper layer of the negative electrode mixture layer, a graphite B2 having a particle fracture strength of 10 MPa, a circularity of 0.90, and D50 of 18 $\mu$m was used instead of the graphite B1.

<Example 6>

A negative electrode was produced to evaluate the above performance in the same manner as in Example 1 except that, in the preparation of the first negative electrode mixture slurry to form the upper layer of the negative electrode mixture layer, a graphite A2 having a particle fracture strength of 35 MPa, a circularity of 0.90, and D50 of 18 $\mu$m was used instead of the graphite A1.

<Example 7>

A negative electrode was produced to evaluate the above performance in the same manner as in Example 1 except that, in the preparation of the first negative electrode mixture slurry to form the upper layer of the negative electrode mixture layer, a graphite A3 having a particle fracture strength of 20 MPa, a circularity of 0.91, and D50 of 18 $\mu$m was used instead of the graphite A1.

<Example 8>

A negative electrode was produced to evaluate the above performance in the same manner as in Example 1 except that, in the preparation of the second negative electrode mixture slurry to form the lower layer of the negative electrode mixture layer, the graphite A1 was used instead of a part of the graphite B1 and the graphite A1 and the graphite B1 were mixed at a mass ratio of 20:80.

<Comparative Example 1>

A negative electrode was produced to evaluate the above performance in the same manner as in Example 1 except that, in the preparation of the first negative electrode mixture slurry to form the upper layer of the negative electrode mixture layer, a graphite A4 having a particle fracture strength of 7 MPa, a circularity of 0.95, and D50 of 18 $\mu$m was used instead of the graphite A1.

<Comparative Examples 2 to 4>

Negative electrodes were produced to evaluate the above performance in the same manner as in Example 1 except that, in the preparation of the first negative electrode mixture slurry to form the upper layer of the negative electrode mixture layer, a graphite A5 having a particle fracture strength of 20 MPa, a circularity of 0.95, and D50 of 18 $\mu$m was used instead of the graphite A1, and the graphite A5 and the graphite B1 were mixed at a mass ratio shown in Table 1.

<Comparative Example 5>

A negative electrode was produced to evaluate the above performance in the same manner as in Example 1 except that, in the preparation of the first negative electrode mixture slurry to form the upper layer of the negative electrode mixture layer, the graphite A1 and the graphite B1 were mixed at a mass ratio shown in Table 1.

<Comparative Example 6>

A negative electrode was produced to evaluate the above performance in the same manner as in Example 1 except that, in the preparation of the first negative electrode mixture slurry to form the upper layer of the negative electrode mixture layer, a graphite A6 having a particle fracture strength of 45 MPa, a circularity of 0.90, and D50 of 18 $\mu$m was used instead of the graphite A1.

<Comparative Example 7>

A negative electrode was produced to evaluate the above performance in the same manner as in Example 1 except that, in the preparation of the first negative electrode mixture slurry to form the upper layer of the negative electrode mixture layer, a graphite A7 having a particle fracture strength of 45 MPa, a circularity of 0.95, and D50 of 18 $\mu$m was used instead of the graphite A1.

<Comparative Example 8>

A negative electrode was produced to evaluate the above performance in the same manner as in Example 1 except that, in the preparation of the first negative electrode mixture slurry to form the upper layer of the negative electrode mixture layer, a graphite A8 having a particle fracture strength of 7 MPa, a circularity of 0.90, and D50 of 18 $\mu$m was used instead of the graphite A1.

<Comparative Example 9>

A negative electrode and a battery were produced to evaluate the above performance in the same manner as in Example 1 except that, in the production of the negative electrode, the lower layer of the negative electrode mixture layer was formed by using the first negative electrode mixture slurry, and the upper layer of the negative electrode mixture layer was formed by using the second negative electrode mixture slurry.

[Table 1]

| | Graphite particle | | | | Mass ratio | | Evaluation results | |
|---|---|---|---|---|---|---|---|---|
| | Fracture strength (MPa) | | Strength ratio | Circularity | Upper layer | Lower layer | Permeation time (sec) | Peeling strength (N/m) |
| | A | B | A/B | A | A:B | A:B | | |
| Example 1 | 20 | 7 | 3 | 0.90 | 50:50 | 0:100 | 60 | 95 |
| Example 2 | 20 | 7 | 3 | 0.90 | 35:65 | 0:100 | 70 | 99 |
| Example 3 | 20 | 7 | 3 | 0.90 | 75:25 | 0:100 | 55 | 90 |
| Example 4 | 20 | 7 | 3 | 0.90 | 100:0 | 0:100 | 50 | 85 |
| Example 5 | 20 | 10 | 2 | 0.90 | 50:50 | 0:100 | 65 | 98 |
| Example 6 | 35 | 7 | 5 | 0.90 | 50:50 | 0:100 | 55 | 92 |
| Example 7 | 20 | 7 | 3 | 0.91 | 50:50 | 0:100 | 65 | 97 |
| Example 8 | 20 | 7 | 3 | 0.90 | 50:50 | 20:80 | 55 | 90 |
| Comparative Example 1 | 7 | 7 | 1 | 0.95 | 50:50 | 0:100 | 100 | 100 |
| Comparative Example 2 | 20 | 7 | 3 | 0.95 | 50:50 | 0:100 | 80 | 92 |
| Comparative Example 3 | 20 | 7 | 3 | 0.95 | 75:25 | 0:100 | 75 | 91 |
| Comparative Example 4 | 20 | 7 | 3 | 0.95 | 25:75 | 0:100 | 95 | 95 |
| Comparative Example 5 | 20 | 7 | 3 | 0.90 | 25:75 | 0:100 | 85 | 106 |
| Comparative Example 6 | 45 | 7 | 6 | 0.90 | 50:50 | 0:100 | 50 | 73 |
| Comparative Example 7 | 45 | 7 | 6 | 0.95 | 50:50 | 0:100 | 60 | 75 |
| Comparative Example 8 | 7 | 7 | 1 | 0.90 | 50:50 | 0:100 | 130 | 93 |

(continued)

| | Graphite particle | | | | Mass ratio | | Evaluation results | |
|---|---|---|---|---|---|---|---|---|
| | Fracture strength (MPa) | | Strength ratio | Circularity | Upper layer | Lower layer | Permeation time (sec) | Peeling strength (N/m) |
| | A | B | A/B | A | A:B | A:B | | |
| Comparative Example 9 | 20 | 7 | 3 | 0.90 | 50:50 | 50:50 | 60 | 70 |

As shown in Table 1, any of the negative electrodes of Examples have high peeling strength of the negative electrode mixture layer and exhibit a short permeation time of the electrolyte liquid. That is, the negative electrodes of Examples have good adhesiveness of the negative electrode mixture layer to the negative electrode core, and have excellent permeability of the electrolyte liquid. In contrast, the negative electrodes of Comparative Examples fail to achieve both of the good adhesiveness of the negative electrode mixture layer and the permeability of the electrolyte liquid.

REFERENCE SIGNS LIST

10 Non-aqueous electrolyte secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 Negative electrode core, 31 Negative electrode mixture layer, 31A Upper layer, 31B Lower layer, 32A First graphite particle, 32B Second graphite particle

**Claims**

1.   A negative electrode for a non-aqueous electrolyte secondary battery, comprising:

    a negative electrode core; and
    a negative electrode mixture layer formed on the negative electrode core, wherein
    the negative electrode mixture layer includes graphite particles as a negative electrode active material, and has a lower layer formed on a side of the negative electrode core and an upper layer formed on a surface side of the negative electrode mixture layer,
    the graphite particles include first graphite particles having a circularity of less than 0.92 and second graphite particles having a circularity higher than that of the first graphite particles,
    a ratio of a fracture strength of the first graphite particles to a fracture strength of the second graphite particles is greater than or equal to 2 and less than or equal to 5, and
    a content rate of the first graphite particles to the graphite particles in the upper layer is greater than or equal to 30 mass%, and is higher than a content rate of the first graphite particles to the graphite particles in the lower layer.

2.   The negative electrode for a non-aqueous electrolyte secondary battery according to claim 1, wherein the lower layer includes the second graphite particles as a main component.

3.   The negative electrode for a non-aqueous electrolyte secondary battery according to claim 1 or 2, wherein the content rate of the first graphite particles to the graphite particles in the upper layer is greater than or equal to 50 mass% and less than or equal to 100 mass%.

4.   The negative electrode for a non-aqueous electrolyte secondary battery according to any one of claims 1 to 3, wherein a thickness of the upper layer is greater than or equal to 10% and less than or equal to 60% of a thickness of the negative electrode mixture layer.

5.   The negative electrode for a non-aqueous electrolyte secondary battery according to any one of claims 1 to 4, wherein the negative electrode mixture layer includes a silicon material as the negative electrode active material.

6. A non-aqueous electrolyte secondary battery, comprising:

the negative electrode for a non-aqueous electrolyte secondary battery according to any one of claims 1 to 4;
a positive electrode; and
a non-aqueous electrolyte.

# Figure 1

Figure 2

## INTERNATIONAL SEARCH REPORT

| International application No. |
| --- |
| **PCT/JP2022/004496** |

**A. CLASSIFICATION OF SUBJECT MATTER**

*H01M 4/13*(2010.01)i; *H01M 4/133*(2010.01)i; *H01M 4/134*(2010.01)i; *H01M 4/36*(2006.01)i; *H01M 4/38*(2006.01)i; *H01M 4/48*(2010.01)i; *H01M 4/587*(2010.01)i

FI: H01M4/133; H01M4/587; H01M4/134; H01M4/13; H01M4/38 Z; H01M4/48; H01M4/36 D

According to International Patent Classification (IPC) or to both national classification and IPC

**B. FIELDS SEARCHED**

Minimum documentation searched (classification system followed by classification symbols)

H01M4/13; H01M4/133; H01M4/134; H01M4/36; H01M4/38; H01M4/48; H01M4/587

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2013-089327 A (HITACHI LTD) 13 May 2013 (2013-05-13) <br> claims, table 1 | 1-6 |
| A | JP 2017-062911 A (GS YUASA CORP) 30 March 2017 (2017-03-30) <br> claims | 1-6 |
| A | JP 2009-176494 A (SONY CORP) 06 August 2009 (2009-08-06) <br> claims | 1-6 |

☐ Further documents are listed in the continuation of Box C.    ☑ See patent family annex.

| | |
| --- | --- |
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **05 April 2022** | **19 April 2022** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2022/004496**

| Patent document cited in search report | | | Publication date (day/month/year) | Patent family member(s) | Publication date (day/month/year) |
|---|---|---|---|---|---|
| JP | 2013-089327 | A | 13 May 2013 | (Family: none) | |
| JP | 2017-062911 | A | 30 March 2017 | (Family: none) | |
| JP | 2009-176494 | A | 06 August 2009 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012151087 A

- JP 2011175842 A